## Europäisches Patentamt

## European Patent Office

## Office européen des brevets

(11) Veröffentlichungsnummer: **0 159 706**
**B1**

# EUROPÄISCHE PATENTSCHRIFT

(45) Veröffentlichungstag der Patentschrift:
31.01.90

(51) Int. Cl.⁴: **H 04 M 3/22**

(21) Anmeldenummer: 85104986.6

(22) Anmeldetag: 24.04.85

(54) Schaltungsanordnung für Fernmeldevermittlungsanlagen, insbesondere Fernsprechvermittlungsanlagen, mit einer Prüfeinrichtung für Schalteinrichtungen unterschiedlicher Arten.

(30) Priorität: 25.04.84 DE 3415415

(43) Veröffentlichungstag der Anmeldung:
30.10.85 Patentblatt 85/44

(45) Bekanntmachung des Hinweises auf die Patenterteilung:
31.01.90 Patentblatt 90/5

(84) Benannte Vertragsstaaten:
AT BE CH DE FR GB IT LI NL SE

(56) Entgegenhaltungen:
EP-A- 0 095 675
DE-A- 3 035 986
DE-A- 3 122 172

TELCON REPORT, 4. Jahrgang, 1981, Beiheft, München, (Deutschland) R, BORGER ua. "Periphere Anschlussgruppen im System EWSD", Seiten 19-27.

(73) Patentinhaber: Siemens Aktiengesellschaft,
Wittelsbacherplatz 2, D-8000 München 2 (DE)

(72) Erfinder: Alt, Rainer, Dipl.-Ing.(FH), Esterbergstrasse 33,
D-8130 Starnberg (DE)
Erfinder: Wagner, Richard, Peter-Rosegger-Strasse 22,
D-8039 Puchheim (DE)

## Beschreibung

Die Erfindung betrifft eine Schaltungsanordnung für Fernmeldevermittlungsanlagen, insbesondere Fernsprechvermittlungsanlagen, in denen zentrale oder teilzentrale Vermittlungseinheiten mit unterschiedlichen Arten von Schalteinrichtungen bestückt sind, und in denen sich diese Schalteinrichtungen hinsichtlich verbindungsindividuell von ihnen aufgenommener und/oder von ihnen abgegebener Schaltkennzeichen und/oder deren Verarbeitung und/oder der technischen Randbedingungen für die Übertragung von verbindungsindividuellen Nachrichten unterscheiden, und in denen diese Schalteinrichtungen außer zur Herstellung von Nachrichtenverbindungen auch (für Prüfmaßnahmen) über eine Prüfeinrichtungs-Anschalteeinrichtung mit einer Prüfeinrichtung verbindbar sind, und in denen die Schalteinrichtungen für Aufbau, Aufrechterhaltung und Auslösung von Nachrichtenverbindungen von einer zu der jeweiligen Vermittlungseinheit gehörenden, den Schalteinrichtungen gemeinsamen Steuereinrichtung gesteuert werden, die auch von der Prüfeinrichtung her zu Prüfzwecken beeinflußbar ist, wobei die Steuereinrichtung die der jeweiligen Art einer jeden Schalteinrichtung gemäßen Funktionen in Kommunikation mit einer zur Prüfeinrichtung gehörenden Nachbildung abwickelt, die jeweils eine mit der betreffenden Schalteinrichtung bei Nachrichtenverbindungen zusammengeschaltete Korrespondenz-Schalteinrichtung vertritt.

In derartigen Vermittlungsanlagen eingesetzte Prüfeinrichtungen können sich also zu Prüfzwecken an die Schalteinrichtungen anschalten. Bei den Schalteinrichtungen möge es sich um Teilnehmeranschlußschaltungen, Fernverbindungssätze und/oder um Leitungsabschlußschaltungen von Ort- und Fernverbindungsleitungen handeln. Diese Schalteinrichtungen unterscheiden sich voneinander in verschiedener Hinsicht. Von ihnen aufzunehmende Schaltkennzeichen sind z.B. das Anrufsignal (Aushängen), das durch Schließung der Leitungsschleife gegeben wird, und Wahlimpulse, die durch Schleifenunterbrechungen gegeben werden. Diese Schaltkennzeichen treffen in Teilnehmeranschlußschaltungen ein, an die Teilnehmerleitungen mit Schleifenimpulsgabe angeschlossen sind. Diese Schaltkennzeichen haben bei Teilnehmerleitungen mit Tastaturwahl aber andere Gestalt, und zwar je nach dem, ob dabei das Dioden-Erd-Verfahren oder das Mehrfrequenzcode-Verfahren angewendet wird. Handelt es sich um Internverbindungssätze, so sind aufzunehmende Schaltkennzeichen z.B. das Meldekennzeichen und das Auslösekennzeichen, aber auch noch weitere Schaltkennzeichen, wie z.B. das Rückfragekennzeichen und das Umlegekennzeichen, die durch Erdung der Teilnehmerleitungsschleife gebildet werden. Handelt es sich um Leitungsabschlußschaltungen, so gibt es eine ganze Anzahl von Zeichengabeverfahren mit verschiedenen Schaltkennzeichen, die zum Beispiel in der deutschen Patentschrift 2 616 056 (VPA 76 P 6104) aufgeführt sind. Dort werden auch von diesen verschiedenen Schalteinrichtungen abzugebende Schaltkennzeichen beschrieben. Auch diese Schaltkennzeichen sind je nach Art der betreffenden Schalteinrichtung unterschiedlich. – Darüber hinaus werden diese Schaltkennzeichen teilweise auch verschieden verarbeitet, d.h. auch Schaltkennzeichen, die in der gleichen Form abgegeben und übertragen werden, jedoch je nach Art der betreffenden Schalteinrichtung verschiedene Bedeutung haben. Ein Wechselstromimpuls z.B. kann Rufsignal für Teilnehmerruf sein, welches in Amtsübertragungen von Nebenstellenvermittlungsanlagen als ankommender Ruf gewertet wird und in bekannter Weise bestimmte weitere Schaltvorgänge herbeiführt, kann aber auch ein Wahlimpuls bei Wechselstromübertragungen (Abschlußschaltungen von Verbindungsleitungen mit Wechselstrom-Signalgabe) oder ein Auslösesignal bei Gleichstromübertragungen mit Wechselstromauslösung sein. – Ferner können sich die angesprochenen Schalteinrichtungen hinsichtlich der technischen Randbedingungen für die Übertragung von verbindungsindividuellen Nachrichten unterscheiden. Hierunter fallen z.B. unterschiedliche Widerstandswerte von Leitungsabschlußwiderständen oder einzuhaltende zeitliche Abstände zwischen verschiedenen Zeitkennzeichen und dergleichen. – Gemäß den vorstehenden Erläuterungen geht die Erfindung also davon aus, daß Schalteinrichtungen vorhanden sind, die sich hinsichtlich verbindungsindividuell von ihnen aufgenommener und/oder von ihnen abgegebener Schaltkennzeichen und/oder deren Verarbeitung und/oder der technischen Randbedingungen für die Übertragung von verbindungsindividuellen Nachrichten unterscheiden.

Wie oben bereits weiterhin ausgeführt wurde, sind die genannten Schalteinrichtungen außer zur Herstellung von Nachrichtenverbindungen auch zu Prüfzwecken mit einer Prüfeinrichtung verbindbar. Hierzu dient eine Prüfeinrichtung-Anschalteeinrichtung, über die sich die Prüfeinrichtung mit jeder der Schalteinrichtungen verbinden kann. Die Prüfeinrichtung führt einzeln mit jeder der Schalteinrichtungen Prüfvorgänge durch, wobei sie der jeweiligen Art der betreffenden Schalteinrichtung gemäße Funktionen abwickelt. Einer Anzahl von Schalteinrichtungen ist gemeinsam eine Steuereinrichtung zugeordnet, die die einzelnen Schaltfunktionen in jeder der Schalteinrichtungen steuert. Auch die Prüfeinrichtung bedient sich dieser Steuereinrichtung, um die der jeweiligen Schalteinrichtung gemäßen Funktionen zur Durchführung der Prüfvorgänge zur Ausführung zu bringen.

Es ist nun erforderlich, daß bei der Abwicklung von Prüfvorgängen an einer jeden Schalteinrichtung die der jeweils betreffenden Schalteinrichtung entsprechende Nachbildung an die jeweilige Schalteinrichtung angeschaltet wird. Diese der Abwicklung von Prüfvorgängen dienenden Nachbildungen dienen bekanntlich dazu, jeweils eine mit der betreffenden Schalteinrichtung bei Nachrichtenverbindungen zusammengeschaltete Korrespondenz-Schalteinrichtung zu vertreten. Diese Nachbildung hat also die Aufgabe, bei Prüfvorgängen und zu deren Abwicklung die jeweiligen Funktionen der entsprechenden Korrespondenz-Schalteinrichtung auszuführen. Dies ist z. B. bei einer Teilnehmeranschlußschaltung eine Teilnehmerstation, bei einer Leitungsabschlußschaltung eine ihr zugeordnete zweite Leitungsabschlußschaltung am anderen Leitungsende usw..

Wie einleitend auch angegeben ist, bezieht sich die Erfindung u. a. auf Vermittlungseinheiten, die mit unterschiedlichen Arten der erweiterten Schalteinrichtungen bestückt sind. Dabei resultiert für die Prüfeinrichtung das Erfordernis, daß ihre Nachbildung bei einem Übergang von einer Schalteinrichtung einer bestimmten Art zu einer Schalteinrichtung einer anderen Art jeweils umgeschaltet, bzw. den technischen Prüferfordernissen angepaßt werden muß.

In bekannten Fällen ist für die Abwicklung der Prüfvorgänge vorgesehen, daß bei jedem Prüfvorgang mit jeweils einer Schalteinrichtung, die also jeweils eine Schalteinrichtung einer der verschiedenen Arten ist, die der betreffenden Art entsprechende Nachbildung mit dieser Schalteinrichtung verbunden werden muß. Hierbei ist es üblich, daß nach den in einer Liste zusammengefaßten Angaben über die Bestückung der betreffenden Vermittlungseinheit mit Schalteinrichtungen der verschiedenen Arten vorgegangen wird. Dabei ist also mit einer jeden zu prüfenden Schalteinrichtung die ihrer jeweiligen Art entsprechende Nachbildung dazuzuschalten (siehe auch DE-A1-3 035 986).

Für die Erfindung besteht die Aufgabe, die Abwicklung von Prüfvorgängen in Fernmeldevermittlungsanlagen eingangs angegebener Art, also bei Vermittlungseinrichtungen, von denen jede mit Schalteinrichtungen der verschiedenen Arten bestückt ist, dahingehend zu vereinfachen, daß eine serienweise Prüfung aller Schalteinrichtungen pro Vermittlungseinrichtung einfach, sowie unabhängig von der jeweiligen Bestückung der betreffenden Schalteinrichtung gehandhabt werden kann.

Diese Aufgabe wird durch die Erfindung dadurch gelöst, daß entsprechend den mehreren Arten von Schalteinrichtungen mehrere Nachbildungen vorgesehen sind, daß in einem Speicher, zu dem die Steuereinrichtung und/oder die Prüfeinrichtung Zugriff haben, bzw. hat, in Zuordnung zu Adressen der Schalteinrichtungen deren jeweilige Art bezeichnende Artmerkmale gespeichert sind, und daß die Prüfeinrichtung zur Abwicklung eines Prüfvorganges an einer Schalteinrichtung nach Maßgabe des betreffenden Artmerkmals dieser Schalteinrichtung die ihm entsprechende Nachbildung wirksam schaltet, und die Steuereinrichtung veranlaßt, die beim Vermittlungsbetrieb vorgesehenen Schaltfunktionen in der mit der ihrer Art entsprechenden Nachbildung verbundenen betreffenden Schalteinrichtung durchzuführen.

Die Erfindung ermöglicht es, eine Prüfung nacheinander von allen jeweils in einer Vermittlungseinheit enthaltenen Schalteinrichtungen durchzuführen, ohne daß dabei bei jeder pro Schalteinrichtung vorgesehenen Serie von Prüfschaltabläufen vorbereitend jedes Mal erneut die der jeweiligen Art von Schalteinrichtung entsprechende Nachbildung ausgewählt und der Prüfeinrichtung zugeschaltet werden muß.

Die Prüfeinrichtung schaltet vielmehr selbsttätig die einer jeweiligen Schalteinrichtung entsprechende Nachbildung wirksam; außerdem wird nach Maßgabe der gespeicherten Artmerkmale die Steuereinrichtung durch die Prüfeinrichtung veranlaßt, die jeweils erforderlichen Prüfschaltfunktionen zur Ausführung zu bringen.

Für die Speicherung der Artmerkmale der verschiedenen Arten von Schalteinrichtungen gibt es mehrere Möglichkeiten. Gemäß einer Weiterbildung der Erfindung kann der betreffende Speicher Bestandteil der Prüfeinrichtung selbst sein. In diesen Speichern kann zur Durchführung der Prüfvorgänge ein entsprechendes Speichermedium eingefügt werden, oder der betreffende Speicherinhalt kann in einen entsprechenden Speicher der Prüfeinrichtung eingelesen werden. In Abwandlung davon ist es auch gemäß einer anderen Weiterbildung der Erfindung möglich, daß dieser Speicher Bestandteil der Steuereinrichtung ist. Das für diesen Speicher zuvor Gesagte gilt auch in diesem Falle.

Gemäß einer anderen Weiterbildung der Erfindung ist vorgesehen, daß der Speicher aus Speichereinheiten besteht, die jeweils Bestandteile der einzelnen Schalteinrichtungen sind, und daß jeweils in einer Speichereinheit die die betreffende Schalteinrichtung bezeichnenden Artmerkmale gespeichert sind, und daß zu Beginn eines Prüfvorganges an einer Schalteinrichtung die entsprechende Speichereinheit durch die Steuereinrichtung und/oder Prüfeinrichtung abgefragt wird. Hieraus ergibt sich der besondere Vorteil, daß bei einem Wechsel der Bestückung einer Vermittlungseinheit bezüglich der verschiedenen Arten der betreffenden Schalteinrichtungen eine entsprechende Neufüllung des betreffenden Speichers sich erübrigt. Jedes der Schalteinrichtungen gibt selbst ihr Artmerkmal ab, wenn sie daraufhin abgefragt wird. Ganz allgemein aber bringt diese zuletzt angegebene Weiterbildung der Erfindung den Vorteil mit sich, daß sich bei Durchführung von Prüfvorgängen nacheinander an den Schalteinrichtungen mehrere Vermittlungseinheiten ein Neuladen des betreffenden Speichers beim Übergang von einer Vermittlungseinheit zur nächsten Vermittlungseinheit erübrigt.

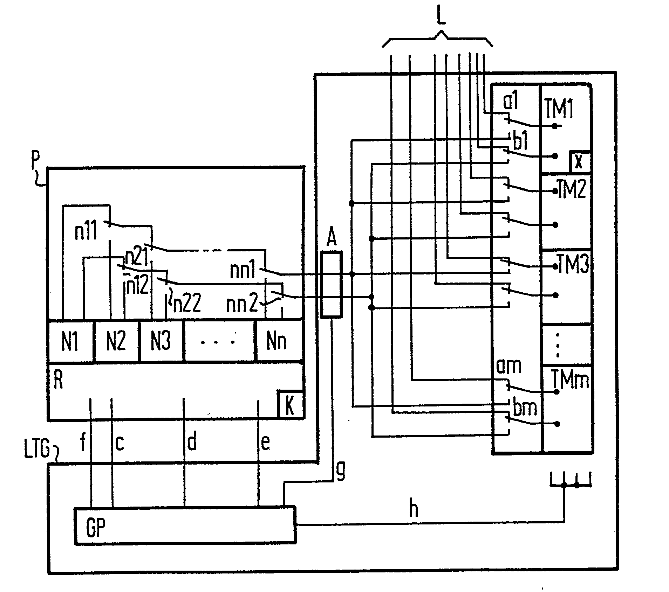

In der Zeichnung ist ein Ausführungsbeispiel der Erfindung nur in wesentlich zu ihrem Verständnis beitragenden Bestandteilen dargestellt. Eine Anschlußgruppe LTG (zuvor als «Vermittlungseinheit» bezeichnet) ist Bestandteil einer größeren Fernsprechvermittlungsanlage, die in größerer Vollständigkeit z. B. in der deutschen Offenlegungsschrift 31 22 172 (VPA 81 P 6242) dargestellt und beschrieben. Außerdem sei auf das Beiheft der Zeitschrift «telcom report» des vierten Jahrganges (1981) hingewiesen. Die weitere Beschreibung des erfindungsgemäßen Ausführungsbeispiels setzt die zuvor angegebene Literatur als bekannt voraus. Wie aus der genannten Offenlegungsschrift hervorgeht, ist an jede der Anschlußgruppen eine Anzahl von Teilnehmerleitungen und/oder Verbindungsleitungen angeschlossen. Diese sind in der Zeichnung der vorliegenden Patentanmeldung mit «L» bezeichnet. Sowohl die Teilnehmerleitungen, als auch die Verbindungsleitungen können Analogteilnehmerleitungen bzw. -verbindungsleitungen oder Digitalteilnehmerleitungen bzw. -verbindungsleitungen sein. Analog-Verbindungsleitungen können Ortsverbindungsleitungen sowie Fernverbindungsleitungen sein. Sie können auf der Basis der Gleichstrom-Übertragungstechnik arbeiten oder aber auch mit sogenannten Wechselstromübertragungen an ihren Leitungsenden ausgestattet sein; ferner können diese Leitungen Induktivwahlleitungen oder auch Leitungen mit zentralem Zeichenkanal sein. In der bereits weiter oben erwähnten deutschen Offenlegungsschrift 2 616 056 (VPA 76 P 6104) ist bereits die Vielfalt von Möglichkeiten angegeben, in der Verbindungsleitungen und ihre Leitungsabschlußschaltungen aufgebaut sein können und mit der sie arbeiten, insbesondere hinsichtlich der Übertragung der erforderlichen Schaltkennzeichen.

Für die in der Zeichnung angedeuteten Leitungen besteht die zuvor angegebene Vielfalt von Möglichkeiten hinsichtlich der jeweils zur Anwendung kommenden Nachrichten- und Schaltkennzeichen-Übertragungstechnik. Dieser Vielfalt entspricht die Vielfalt von unterschiedlichen Arten von Schalteinrichtungen, mit denen jede der Anschlußgruppen bestückt sein kann. Diese Schalteinrichtungen sind Leitungsabschlußschaltungen von Verbindungsleitungen und/oder Teilnehmeranschlußschaltungen für den Anschluß von Teilnehmerleitungen. Diese Schalteinrichtungen unterscheiden sich also hinsichtlich verbindungsindividuell von ihnen aufgenommenen und/oder von ihnen abgegebenen Schaltkennzeichen und/oder deren Verarbeitung und/oder der technischen Randbedingungen für die Übertragung von verbindungsindividuellen Nachrichten. Die hierunter im einzelnen zu verstehenden technischen Details wurden bereits einleitend im einzelnen erläutert. Die genannten Schalteinrichtungen, z.B. TM1 bis TMm sind über die Kontakte a1 bis bn mit den Leitungen L verbunden, wenn sich diese Kontakte in ihrer dargestellten Ruhelage befinden. Bei den dargestellten Schalteinrichtungen TM1 bis TMm kann es sich auch um Mehrfachanschlußschaltungen bzw. jeweils zu mehreren zusammengefaßten Leitungsabschlußschaltungen handeln, was bereits in der deutschen Offenlegungsschrift 2 826 113 sowie in der bereits genannten deutschen Offenlegungsschrift 31 22 172 (VPA 81 P 6242) erläutert ist. Dies hat besondere Bedeutung für den Fall der Anwendung der Zeitmultiplextechnik bei den genannten Verbindungsleitungen und Teilnehmerleitungen.

Die Schalteinrichtungen TM1 bis TMm sind außer zur Herstellung von Nachrichtenverbindungen über die Leitungen L auch zu Prüfzwecken über eine Prüfeinrichtungs-Anschalteeinrichtung A mit einer Prüfeinrichtung P verbindbar. Hierzu sind außerdem die Umschaltkontakte a1 bis bm zu betätigen. Diese Umschaltkontakte können der Prüfeinrichtungs-Anschalteeinrichtung subsummiert werden. Zur Prüfung jeweils einer der Schalteinrichtungen, z.B. TM1 werden jeweils die ihr entsprechenden Umschaltekontakte, z.B. A1/B1, betätigt. Außerdem erfolgt eine Durchschaltung in der Anschalteeinrichtung A. Die Durchschaltung kann galvanisch geschehen, wie es unmittelbar aus den dargestellten Umschaltkontakten hervorgeht, aber auch auf Zeitmultiplexbasis.

Die Schalteinrichtungen TM1 bis TMm werden für den Aufbau, die Aufrechterhaltung und die Auslösung von Nachrichtenverbindungen von einer zu der betreffenden Anschlußgruppe LTG gehörenden und den genannten Schalteinrichtungen gemeinsamen Steuereinrichtung GP gesteuert. Dies ist in den bereits genannten Literaturstellen in großer Ausführlichkeit bereits erläutert. Diese Steuereinrichtung GP ist nun auch von der Prüfeinrichtung P her beeinflußbar. Hierzu dienen Steuerleitungen, die gemeinsam mit «f» bezeichnet sind. Zur Durchführung von Prüfvorgängen bedient sich die Prüfeinrichtung P also auch der gemeinsamen Steuereinrichtung GP. Dabei wikkelt die Steuereinrichtung GP die der jeweiligen Art einer jeden Schalteinrichtung gemäßen Funktionen bei der jeweils zu prüfenden Schalteinrichtung ab. Bei diesen Funktionen handelt es sich um die Abgabe von Schaltkennzeichen und den Empfang von Schaltkennzeichen, sowie um die Abgabe und die Aufnahme von Nachrichtensignalen, z.B. Hörtönen.

Zur Durchführung der Prüfung einer der Schalteinrichtungen, z.B. TM1, werden also einerseits die beiden Kontakte a1 und b1 umgelegt und andererseits wird eine Durchschaltung in der Anschalteeinrichtung A bewerkstelligt. Dies wird gesteuert durch die Prüfeinrichtung P und zwar über die gemeinsame Steuereinrichtung GP und über Steuerstromkreise g und h. Die Steuerstromkreise h sind die regulären Steuerstromkreise für die Steuerung der genannten Schalteinrichtungen durch die gemeinsame Steuereinrichtung GP.

Die Prüfung einer Schalteinrichtung muß immer zusammen mit einer Nachbildung erfolgen, die jeweils eine mit der betreffenden Schalteinrichtung bei Nachrichtenverbindungen zusammengeschaltete Korrespondenz-Schalteinrichtung vertritt. Hierbei handelt es sich also um Leitungsabschlußschaltungen jeweils am anderen Ende einer Verbindungsleitung bzw. um Teilnehmerstationen am anderen Ende der betreffenden angeschlossenen Teilnehmeranschlußleitung. Da die genannten Schaltkennzeichen und Nachrichtensignale jeweils mit einer solchen Korrespondenz-Schalteinrichtung ausgetauscht werden, wird zu Prüfzwecken eine Nachbildung einer Korrespondenz-Schalteinrichtung angeschaltet, wobei diese Nachbildung jeweils der betreffenden Korrespondenz-Schalteinrichtung funktionsmäßig entsprechen muß.

In der Prüfeinrichtung P sind mehrere verschiedene Nachbildungen N1 bis Nn dargestellt. Diese verschiedenen Nachbildungen entsprechen den genannten mehreren Arten von Schalteinrichtungen. Bei Durchführung von Prüfvorgängen an sämtlichen Schalteinrichtungen, die zu einer Anschlußgruppe LTG gehören, ist für jeden Prüfvorgang an jeder der Schalteinrichtungen die der jeweils betreffenden Schalteinrichtung entsprechende Nachbildung anzuschalten, die also der jeweiligen Art dieser Schalteinrichtung entspricht. In der Prüfeinrichtung P ist nun ein Speicher K vorgesehen, zu dem die Prüfeinrichtung Zugriff hat oder auch die gemeinsame Steuereinrichtung GP. In diesem Speicher K sind in Zuordnung zu Adressen der einzelnen Schalteinrichtungen TM1 bis TMm deren jeweilige Art kennzeichnende Artmerkmale gespeichert. Diesen Artmerkmalen sind die Nachbildungen N1 bis Nn zugeordnet. Die Prüfeinrichtung P schaltet nun zur Abwicklung eines Prüfvorganges jeweils an einer Schalteinrichtung nach Maßgabe des betreffenden Artmerkmals dieser Schalteinrichtung die ihm entsprechende Nachbildung wirksam. Dies geschieht mit Hilfe der Kontakte n11 bis nn2 in sinnfälliger Weise durch die Prüfeinrichtung P. Über die Streuerstromkreise f veranlaßt die Prüfeinrichtung die Steuereinrichtung GP, die beim Vermittlungsbetrieb vorgesehenen Schaltfunktionen in der mit der ihrer Art entsprechenden Nachbildung verbundenen betreffenden Schalteinrichtung durchzuführen. Die Steuereinrichtung GP wird also von der Prüfeinrichtung veranlaßt, die jeweils betreffende Schalteinrichtung dahingehend zu steuern, daß sie Schaltkennzeichen in der für den Verbindungsaufbau üblichen Weise abgibt oder aufnimmt oder auch entsprechende Nachrichtensignale sendet oder empfängt. Hierbei kann es sich um Wahlimpulsserien, das Wahlendezeichen, das Meldekennzeichen, um Quittungszeichen, Auslösekennzeichen und dergleichen, sowie um Hörtonsignale handeln.

Es ist möglich, daß auch gesonderte Stromkreise c, b und e für folgende Zwecke vorgesehen werden: Die Stromkreise c können zur Übertragung von Einstell- und Steuerdaten dienen; über die Stromkreise d kann z.B. die Teilnehmerleitungsschleife bis zur gemeinsamen Steuereinrichtung GP durchgeschaltet werden; über die Stromkreise e kann die Stromversorgung ein- und ausgeschaltet werden.

Wie bereits ausgeführt wurde, ist der Speicher K Bestandteil der Prüfeinrichtung. Zu Beginn eines Gesamt-Prüfvorganges für sämtliche Schalteinrichtungen einer Anschlußgruppe LTG kann in den Speicher K eingelesen werden, welche Artmerkmale die zu der betreffenden Anschlußgruppe LTG gehörenden Schalteinrichtungen TM1 bis TMm aufweisen. Diese Speicherung von Artmerkmalen geschieht jeweils in Zuordnung zu den Ansteueradressen der betreffenden Schalteinrichtungen. Diese Angaben können eingelesen werden von einer für die Vermittlungsstelle gemeinsamen zentralen und hier nicht dargestellten Speichereinrichtung (Magnetbandspeicher oder Magnetplattenspeicher oder dergleichen), in der für sämtliche Anschlußgruppen LTG einer Vermittlungsstelle gespeichert ist, von welcher Art die Schalteinrichtungen sind, die in jeder der Anschlußgruppen vorhanden sind.

Die Prüfeinrichtung P läßt sich auch bei der Produktion von Anschlußgruppen LTG verwenden. In diesem Falle ist in den Speicher K einzulesen, von welcher Art die Schalteinrichtungen in der zu prüfenden Anschlußgruppe sind.

Der genannte Speicher kann anstelle in der Prüfeinrichtung P auch in der gemeinsamen Steuereinrichtung GP vorgesehen sein. Darüber hinaus ist es auch möglich, daß der Speicher aus Speichereinheiten, z.B. x besteht, die jeweils Bestandteile der einzelnen Schalteinrichtung, z.B. TM1, sind. Demgemäß weist jede der Schalteinrichtungen eine solche Speichereinheit auf, was im einzelnen nicht dargestellt ist. Diese Speichereinheiten sind also jeweils Bestandteile der einzelnen Schalteinrichtungen. In jeder der Speichereinheiten ist ein die betreffende Schalteinrichtung bezeichnendes Artmerkmal gespeichert. Anhand dieses Artmerkmals ist also aus jeder der Schalteinrichtungen einzeln entnehmbar, von welcher speziellen Art die betreffende Schalteinrichtung ist. In diesem Falle ist vorgesehen, daß zu Beginn eines Prüfvorganges an einer Schalteinrichtung die ihr entsprechende Speichereinheit durch die Steuereinrichtung und/oder die Prüfeinrichtung abgefragt wird. Hierzu gelangt von der Steuereinrichtung und/oder der Prüfeinrichtung ein Abfragesignal an diejenige Schalteinrichtung, die jeweils als nächste geprüft werden soll. Diese Schalteinrichtung gibt aufgrund des Abfragesignals das in ihr gespeicherte Artmerkmal an die Prüfeinrichtung P ab, die daraufhin die entsprechende Nachbildung mit Hile eines Kontaktpaares der Kontakte n11 bis nn2 wirksam schaltet.

Darüber hinaus ist es auch möglich, daß zu Beginn eines Gesamt-Prüfvorganges an sämtlichen Schalteinrichtungen einer Anschlußgruppe LTG zunächst die Prüfeinrichtung P und/oder die Steuereinrichtung GP sämtliche Schalteinrichtungen bezüglich der in ihr gespeicherten Artmerkmale abfragt und erst danach sukzessive mit den einzelnen Prüfvorgängen beginnt.

**Patentansprüche**

1. Schaltungsanordnung für Fernmeldevermittlungsanlagen, insbesondere Fernsprechvermittlungsanlagen, in denen zentrale oder teilzentrale Vermittlungseinheiten mit unterschiedlichen Arten von Schalteinrichtungen (TM1–TMm) bestückt sind, und in denen sich diese Schalteinrichtungen (TM1–TMm) hinsichtlich verbindungsindividuell von ihnen aufgnommener und/oder von ihnen abgegebener Schaltkennzeichen und/oder deren Verarbeitung und/oder der technischen Randbedingungen für die Übertragung von verbindungsindividuellen Nachrichten unterscheiden, und in denen diese Schalteinrichtungen (TM1–TMm) außer zur Herstellung von Nachrichtenverbindungen auch für Prüfmaßnahmen über eine Prüfeinrichtungs-Anschalteeinrichtung (A) mit einer Prüfeinrichtung (P) verbindbar sind, und in denen die Schalteinrichtungen (TM1–TMm) für Aufbau, Aufrechterhaltung und Auslösung von Nachrichtenverbindungen von einer zu der jeweiligen Vermittlungseinheit (LTG) gehörenden, den Schalteinrichtungen (TM1–TMm) gemeinsamen Steuereinrichtung (GP) gesteuert werden, die auch von der Prüfeinrichtung (P) her zu Prüfzwecken beeinflußbar ist, wobei die Steuereinrichtung (GP) die der jeweiligen Art einer jeden Schalteinrichtung (TM1–TMm) gemäßen Funktionen in Kommunikation mit einer zur Prüfeinrichtung (P) gehörenden Nachbildung (N1–Nn) abwickelt, die jeweils eine mit der betreffenden Schalteinrichtung (TM1–TMm) bei Nachrichtenverbindungen zusammengeschaltete Korrespondenz-Schalteinrichtung vertritt, dadurch gekennzeichnet, daß entsprechend den mehreren Arten von Schalteinrichtungen (TM1–TMm) mehrere Nachbildungen (N1–Nn) vorgesehen sind, daß in einem Speicher (K, x), zu dem die Steuereinrichtung (GP) und/oder die Prüfeinrichtung (P) Zugriff haben, bzw. hat, in Zuordnung zu Adressen der Schalteinrichtungen (TM1–TMm) deren jeweilige Art bezeichnende Artmerkmale gespeichert sind, und daß die Prüfeinrichtung (P) zur Abwicklung eines Prüfvorganges an einer Schalteinrichtung (TM1–TMm) nach Maßgabe des betreffenden Artmerkmals dieser Schalteinrichtung (TM1–TMm) die ihm entsprechende Nachbildung (N1–Nn) wirksam schaltet, und die Steuereinrichtung (GP) veranlaßt, die beim Vermittlungsbetrieb vorgesehenen Schaltfunktionen in der mit der ihrer Art entsprechenden Nachbildung (N1–Nn) verbundenen betreffenden Schalteinrichtung (TM1–TMm) durchzuführen.

2. Schaltungsanordnung nach Anspruch 1, dadurch gekennzeichnet, daß der Speicher (K) Bestandteil der Prüfeinrichtung (P) ist.

3. Schaltungsanordnung nach Anspruch 1, dadurch gekennzeichnet, daß der Speicher Bestandteil der Steuereinrichtung (GP) ist.

4. Schaltungsanordnung nach Anspruch 1, dadurch gekennzeichnet, daß der Speicher aus Speichereinheiten (x) besteht, die jeweils Bestandteile der einzelnen Schalteinrichtungen (TM1–TMm) sind, und daß jeweils in einer Speichereinheit (x) die die betreffende Schalteinrichtung (TM1–TMm) bezeichnenden Artmerkmale gespeichert sind, und daß zu Beginn eines Prüfvorganges an einer Schalteinrichtung (TM1–TMm) die ihr entsprechende Speichereinheit (x) durch die Steuereinrichtung (GP) und/oder Prüfeinrichtung (P) abgefragt wird.

## Claims

1. Circuit arrangement for telecommunication exchanges, particularly telephone exchanges, in which common or intermediate-level switching units are equipped with various types of switching devices (TM1–TMm) and in which these switching devices (TM1–TMm) differ with respect to switching signals connection-individually accepted by them and/or delivered by them and/or their processing and/or the technical boundary conditions for the transmission of connection-individual messages, and in which these switching devices (TM1–TMm), in addition to the establishment of communication links, can also be connected to a testing device (P) via a testing device connecting device (A) for test measures, and in which the switching devices (TM1–TMm) are controlled, for setting-up, maintaining and releasing communication links, by a control device (GP) which belongs to the respective switching unit (LTG) and is common to the switching devices (TM1–TMm) and which can also be influenced for testing purposes from the testing device (P), in which arrangement the control device (GP) handles the functions corresponding to the respective type of each switching device (TM1–TMm) in communication with a functional equivalent (N1–N17) belonging to the testing device (P), which in each case represents a corresponding switching device connected together with the relevant switching device (TM1–TMm) in communication links-ups, characterized in that, corresponding to the several types of switching devices (TM1–TMm), several functional equivalents (N1–Nn) are provided, in that in a memory (K, x), which can be accessed by the control device (GP) and/or the testing device (P), type features designating the respective type of the switching devices are stored in association with addresses of the switching devices (TM1–TMm), and in that the testing device (P), for handling a testing process at a switching device (TM1–TMm) as determined by the relevant type feature of this switching device (TM1–TMm), switches into action the corresponding functional equivalent (N1–Nn) and causes the control device (GP) to carry out the switching functions provided for switching operation in the relevant switching device (TM1–TMm) connected to the functional equivalent (N1–Nn) corresponding to its type.

2. Circuit arrangement according to Claim 1, characterized in that the memory (K) is a component of the testing device (P).

3. Circuit arrangement according to Claim 1, characterized in that the memory is a component of the control device (GP).

4. Circuit arrangement according to Claim 1, characterized in that the memory consists of storage units (x) which are in each case components of the individual switching devices (TM1–TMm), and in that the type features designating the relevant switching device (TM1–TMm) are in each case stored in a storage unit (x), and in that, at the beginning of a testing process at a switching device (TM1–TMm), the storage unit (x) corresponding to it is interrogated by the control device (GP) and/or testing device (P).

## Revendications

1. Montage pour des installations de télécommunications, notamment des installations de commutation téléphonique, dans lesquelles des unités de commutation centrales ou partiellement centrales sont équipées de dispositifs de commutation (TM1–TMm) de différents types et dans lesquelles ces dispositifs de commutation (TM1–TMm) sont différents pour ce qui concerne des indicatifs de commutation qu'ils reçoivent ou qu'ils délivrent individuellement pour les liaisons, et/ou le traitement de ces indicatifs et/ou les conditions techniques secondaires pour la transmission d'informations prévues individuellement pour les liaisons, et dans lesquelles, en dehors de l'établissement de liaisons de transmission d'informations, ces dispositifs de commutation (TM1–TMm) peuvent être également reliés à un dispositif de contrôle (P) pour la mise en œuvre de dispositions de contrôle par l'intermédiaire d'un dispositif (A) de raccordement au dispositif de contrôle, et dans lesquelles les dispositifs de commutation (TM1–TMm) sont commandés pour l'établissement, le maintien et l'interruption de liaisons de transmission d'informations, par un dispositif de commande (GP) associé au central respectif (LTG) et commun aux dispositifs de commutation (TM1–TMm), et qui peut être également influencé à partir du dispositif de contrôle (P) en vue de réaliser un contrôle, le dispositif de commande (GP) exécutant les fonctions, appropriées pour le type respectif de chaque dispositif de commutation (TM1–TMm), en liaison avec un équilibreur (N1–Nn), qui fait partie du dispositif de contrôle (P) et représente respectivement un dispositif de commutation de correspondance, interconnecté au dispositif de commutation considéré (TM1–TMm) lors de liaisons de transmission d'informations, caractérisé par le fait qu'il est prévu plusieurs équilibreurs (N1–Nn) en correspondance avec les différents types de dispositifs de commutation (TM1–TMm), que les caractéristiques de types, qui désignent les types respectifs des dispositifs de commutation (TM1–TMm), sont mémorisées dans une mémoire (K, X), à laquelle le dispositif de commande (GP) et/ou le dispositif de contrôle (P) ont ou a accès, en association avec les adresses des dispositifs de commutation, et que, pour l'exécution d'une opération de contrôle, le dispositif de contrôle (P) raccorde à un dispositif de commutation (TM1–TMm), en fonction de la caractéristique de type considérée de ce dispositif de commutation (TM1–TMm), l'équilibreur (N1–Nn) qui lui correspond, et active le dispositif de commande (GP) pour qu'il exécute la fonction de commutation, prévue lors du fonctionnement de commutation, dans le dispositif de commutation (TM1–TMm) considéré, relié à l'équilibreur (N1–Nn) qui correspond au type de ce dispositif de commutation.

2. Montage suivant la revendication 1, caractérisé par le fait que la mémoire (K) fait partie du dispositif de contrôle (P).

3. Montage suivant la revendication 1, caractérisé par le fait que la mémoire fait partie du dispositif de commande (GP).

4. Montage suivant la revendication 1, caractérisé par le fait que la mémoire est constituée par des unités de mémoire (X), qui font respectivement partie des différents dispositifs de commutation (TM1–TMm), et que les caractéristiques de type, qui désignent le type du dispositif de commutation considéré (TM1–TMm), sont mémorisées respectivement dans une unité de mémoire (X), et qu'au début d'une opération de contrôle dans un dispositif de commutation (TM1–TMn), l'unité de mémoire (X), qui correspond à ce dispositif, est interrogée par le dispositif de commande (GP) et/ou par le dispositif de contrôle (P).